# EUROPEAN PATENT SPECIFICATION

(11) **EP 2 143 904 B1**
(45) Date of publication and mention of the grant of the patent: **15.01.2014**
(21) Application number: 09164854.3
(22) Date of filing: 08.07.2009
(51) Int. Cl.: F01P 7/04, F16H 9/16, F16H 55/56

(54) **Device for adjusting and controlling the rotation speed of an engine cooling fan**
Vorrichtung zur Einstellung und Regelung der Drehgeschwindigkeit eines Motorkühlgebläses
Dispositif d'ajustement et de contrôle de la vitesse de rotation d'un ventilateur de moteur

(30) Priority: 09.07.2008 IT TO20080529
(43) Date of publication of application: 13.01.2010
(73) Proprietor: CNH Italia S.p.A., 10135 Torino (IT)
(72) Inventor: Romeo, Stefano, 41100 Modena (IT)
(74) Representative: CNH IP Department

(56) References cited:
- EP-A- 1 184 603
- AT-B- 377 828
- DE-A1- 2 741 146
- DE-B- 1 091 439
- US-A- 2 173 661
- US-A- 3 893 343

## Description

The present invention relates to a device for adjusting and controlling the rotation speed of an engine, in particular an internal combustion engine, cooling fan.

As is known, engine cooling fluid is cooled using a radiator, through which the cooling fluid flows, and in which it is cooled using a fan which blows outside air onto the radiator tubes.

In the case of a farm tractor, a need is felt to reduce the noise of the fan when type-testing the tractor, or when less cooling, i.e. a higher engine temperature, is required to heat the water in the operator cab heating circuit. The latter function is particularly useful to heat the operator cab as quickly as possible when starting up the tractor in below-zero temperatures.

At present, this is done using mechanical and/or electronic fan speed adjusting devices.

Fan speed is adjusted using an actuating mechanism for reducing/increasing the distance between two half-pulleys fitted to a driven shaft supporting the cooling fan.

Reducing/increasing the distance between the two half-pulleys alters the velocity ratio between a drive shaft and the driven shaft to adapt the speed of the fan to the desired degree of cooling of the fluid flow through the radiator.

Currently used mechanisms for actuating the two half-pulleys (fitted to the driven shaft), however, are extremely complex and expensive, and employ complex electronic systems to ensure precise adjustment of the distance between the two half-pulleys.

US 2,173,661 A discloses a variable speed drive for a fan using a belt drive with pulleys. At low speed of the driving shaft the fan rotates at its lowest speed and smallest transmission ratio. When speeding the driving shaft the flow resistance of the fan makes a half pulley rotate the hub and via a cam geometry said half moves to obtain a higher transmission ratio.

EP 1 184 603 A2 discloses an invariable speed transmission on motor cycles. Two interlocked cam mechanisms, each comprising a cam geometry moving the moveable sheaves of the driving and driven pulleys, are rotated by a control motor.

DE 27 541 146 A1 discloses a belt transmission system for accessories. The moveable sheaves are positioned to an appropriate transmission ratio by Belleville springs.

AT 377 828 further discloses a belt transmission system for a fan, where one of the moveable sheaves is positioned by a thermostat actuating a lever. The movement of the lever pushes the moveable sheave and adjusts the transmission ratio of the belt drive and thus the fan speed.

It is an object of the present invention to provide a device for adjusting and controlling the rotation speed of an engine cooling fan, designed to eliminate the aforementioned drawbacks, and which at the same time is cheap and easy to produce.

According to the present invention, there is provided a device for adjusting and controlling the rotation speed of an engine cooling fan, as claimed in the accompanying Claims.

A non-limiting embodiment of the present invention will be described by way of example with reference to the accompanying drawings, in which:
Figure 1 shows the device according to the present invention in a first configuration;
Figure 2 shows the device according to the present invention in a second configuration;
Figure 3 shows a three-dimensional view of the Figure 1 and 2 device.

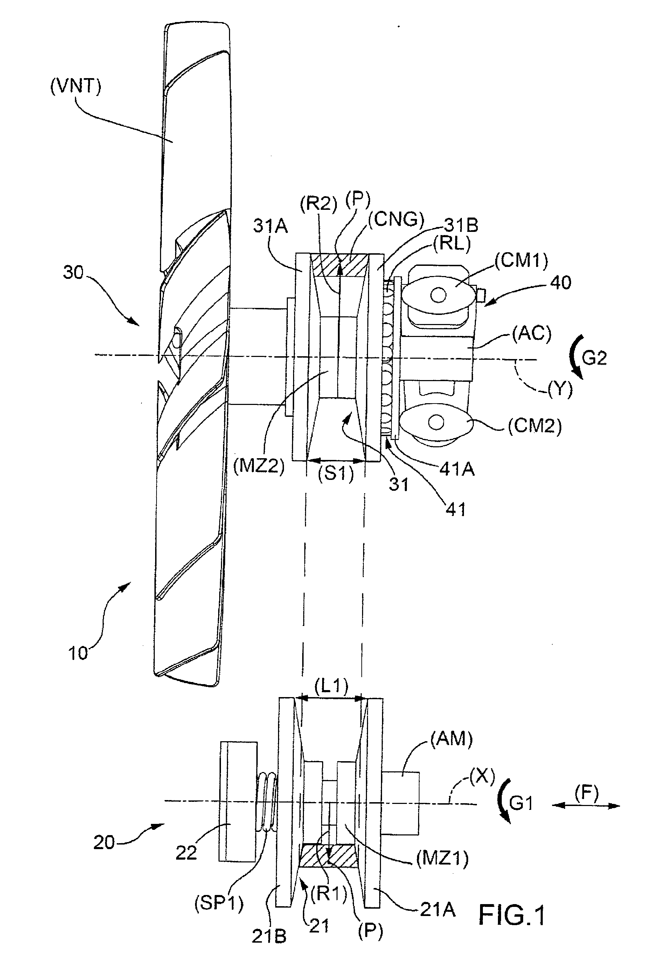

Number 10 in Figure 1 indicates as a whole a device for adjusting and controlling the rotation speed of a cooling fan (VNT) of an engine (not shown).

Device 10 comprises a first device 20, with a pulley 21, for transmitting rotation of a drive shaft (AM), of axis (X), to a second device 30 having a pulley 31 and a driven shaft (AC), of axis (Y), fitted with fan (VNT) to cool a cooling fluid flowing through a radiator (not shown).

Power is transmitted from drive shaft (AM) (of axis (X)) to driven shaft (AC) in known manner by a belt (CNG) (only shown partly for the sake of clarity).

Belt (CNG) has two sloping sides which, in use, press on equally sloping inner surfaces of pulleys 21, 31.

Pulleys 21 and 31 have the same diameter.

As shown in Figure 1, drive shaft (AM) rotates in a direction (G1), and rotates driven shaft (AC) in the same direction (G2) as (G1).

As shown in the attached drawings, pulley 21 comprises a fixed first half-pulley 21A; and a second half-pulley 21B movable in a two-way direction (F) coaxial with axis (X) and parallel to axis (Y).

Both half-pulleys 21A and 21B are fitted to drive shaft (AM).

More specifically, whereas first half-pulley 21A is only rotated by rotation of drive shaft (AM), second half-pulley 21B is not only rotated by drive shaft (AM), but is also movable in direction (F) by the elastic action of a spring (SP1) resting on a fixed disk 22 (see below). For which purpose, second half-pulley 21B and drive shaft (AM) may advantageously be connected by a splined coupling (not shown).

Spring (SP1) must be designed to suitably pretension belt (CNG).

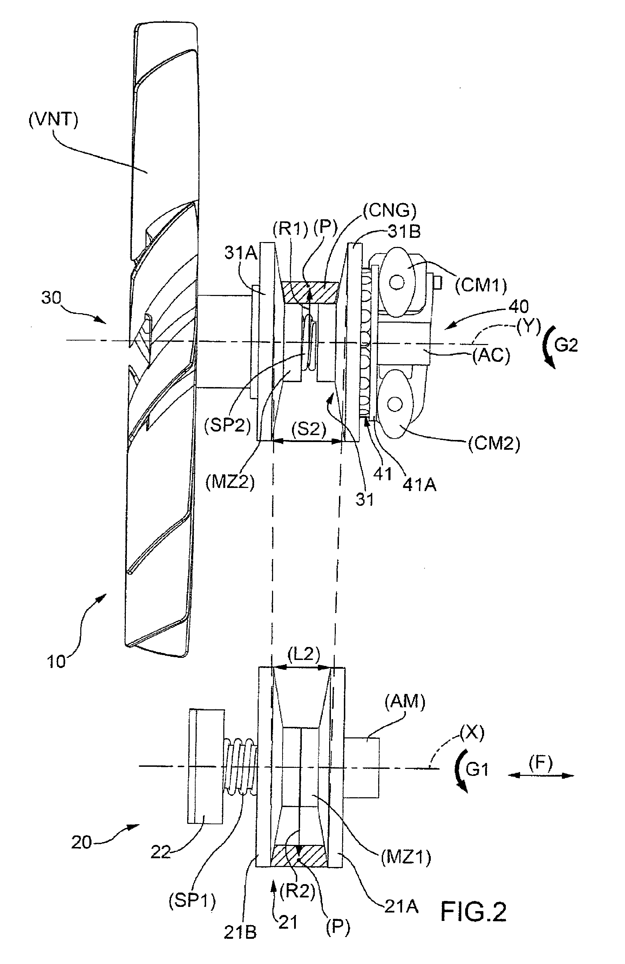

The inner circumference of first half-pulley 21A and the inner circumference of second half-pulley 21B of pulley 21 are separated by a distance (L) which, as will be seen, varies, for example, between a distance (L1) in the Figure 1 configuration, and a distance (L2), smaller than (L1), in the Figure 2 configuration.

Like pulley 21, pulley 31 of second device 30 comprises a fixed first half-pulley 31A; and a second half-pulley 31B also movable in two-way direction (F).

To ensure stability of the system, half-pulleys 21A and 21B are located on opposite sides of belt (CNG) to half-pulleys 31A and 31B respectively.

First half-pulley 31A and second half-pulley 31B of pulley 31 are separated by a distance (S) which, as will be seen, varies, for example, between a distance (S1) in the Figure 1 configuration, and a distance (S2), greater than (S1), in the Figure 2 configuration.

As will be seen below, and as shown by a comparison of Figures 1 and 2, distance (L1) equals distance (S2), and distance (S1) equals distance (L2). More particularly, the change in distance (L) between half-pulleys 21A and 21B always corresponds with the change in distance (S) between the half-pulleys 31A and 31B. So, if the distance (S) increases due to the movement of the cams (see below), the distance (L) will decrease the same amount. This adjustment takes up the change of path of the belt (CNG).

In fact, as shown in Figure 1, the distance of a central point (P) of belt (CNG) varies between a minimum distance (R1) (from axis (X)), when the inner surface of belt (CNG) rests on a hub (MZ1) of pulley 21, and a maximum distance (R2), when point (P) is the maximum distance from axis (Y) of pulley 31.

Since pulleys 21 and 31 are identical, the same obviously also applies to the Figure 2 configuration, except that, in this case, the distance of central point (P) of belt (CNG) varies between minimum distance (R1) (from the axis (Y)), when the inner surface of belt (CNG) rests on a hub (MZ2) of pulley 31, and maximum distance (R2), when point (P) is the maximum permitted distance from axis (X) of pulley 21.

Of course, since it is not possible to move one of the axes (Y) or (X) up and down, the change in path/length of the belt needs to be taken up by changing the distance between (X) and (P) for the same amount as the change of distance between (Y) and (P).

The Figure 1 configuration is adopted to rotate fan (VNT) at low speed and reduce cooling of the cooling fluid through the radiator (not shown).

In this case, in fact, the maximum distance (R2) being on pulley 31, driven shaft (AC) rotates slower than drive shaft (AM), by virtue, obviously, of the step-down ratio of distances (R1) and (R2).

Conversely, the Figure 2 configuration is adopted to rotate fan (VNT) at high speed and rapidly cool the cooling fluid through the radiator (not shown), as, for example, when the tractor is running and vigorous cooling of the engine is required.

In this case, in fact, the maximum distance (R2) being on pulley 21, driven shaft (AC) rotates faster than drive shaft (AM), by virtue, obviously, of the step-up ratio of (R2) and (R1).

As shown in Figure 2, a spring (SP2) is interposed between half-pulleys 31A and 31B, and must be designed to push movable half-pulley 31B, at all times and in any work condition, onto an actuating device 40.

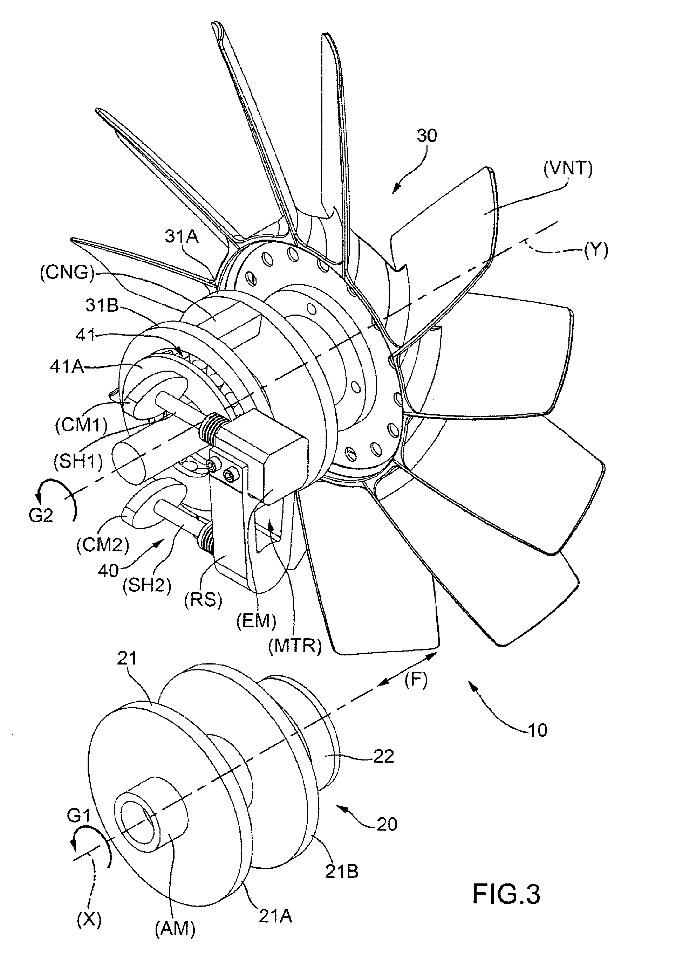

As shown in more detail in Figure 3, actuating device 40 comprises an axial roller bearing 41 on which half-pulley 31B of pulley 31 is mounted.

Axial bearing 41 comprises an annular flange 41A which is angularly fixed but axially movable in direction (F). A second annular flange (not shown) is integral with half-pulley 31B and housed in a seat formed directly in half-pulley 31B. Each roller (RL) of axial bearing 41 rotates about a respective axis radial with respect to axis (Y).

Axial bearing 41 is an enbloc component. It is composed by the annular flanges and in the middle a certain number of rollers (RL) to convert the razing friction to a rolling friction. This means that the two annular flanges of the axial bearing 41 move together with the half-pulley 31B (both rotating around (Y) axis and translating in (F) direction), because one flange of the bearing is fixed in the half-pulley 31B. The rollers (RL) rotate around their own axes radial to (Y), and translate along (F). Flange 41A is necessary to be fixed in rotation, to avoid friction with cams (CM1 and CM2). So the 41A flange can only move in the axial direction but it doesn't rotate.

As stated with reference to half-pulley 31B, annular flange 41A and driven shaft (AC) may advantageously be connected by a splined coupling (not shown).

Actuating device 40 also comprises two cams (CM1), (CM2) fitted to respective shafts (SH1), (SH2) connected mechanically to a motor reducer (MTR) (Figure 3).

More specifically, motor reducer (MTR) comprises, in known manner, an electric motor (EM) connected to a reducer (RS) from which shafts (SH1), (SH2) project (Figure 3).

The surfaces of cams (CM1), (CM2) rest on the outer surface of annular flange 41A, so rotation of cams (CM1), (CM2) moves annular flange 41A, and therefore movable half-pulley 31B, in direction (F).

More specifically, when cams (CM1), (CM2) push movable second half-pulley 31B against fixed first half-pulley 31A against the force of the spring (SP2) (as shown in Figure 1), first half-pulley 31A and second half-pulley 31B are separated by minimum distance (S1) (Figure 1), so that belt (CNG), when on pulley 31, is pressed between half-pulleys 31A and 31B, and its sloping sides slide on the sloping inner surfaces of half-pulleys 31A, 31B, so that belt (CNG) assumes distance (R2) with respect to axis (Y). Moreover, belt (CNG) being extremely strong and practically non-extensible, the movement of belt (CNG) away from axis (Y) on pulley 31 corresponds to an equal movement of belt (CNG) towards axis (X) on the other side, i.e. on pulley 21. In which case, point (P) assumes distance (R1) (smaller than (R2)) with respect to axis (X).

It should be pointed out that half-pulley 21B is moved solely by spring (SP1), and moves away from half-pulley 21A when belt (CNG) is drawn upwards by half-pulleys 31A and 31B moving towards each other.

In other words, half-pulley 21B is moved using no other active actuating means (as for moving half-pulley 31B). Motor reducer (MTR) and cams (CM1), (CM2) provide for directly moving half-pulley 31B, and indirectly moving half-pulley 21B with simply some "help" so to speak from spring (SP1).

As soon as cams (CM1), (CM2) are starting to rotate for 90° and thus no longer presses on annular flange 41A, as shown in Figure 2, spring SP2 will move half-pulleys 31A and 31B away from each other, so that the smaller distance (R1) in this case is on the pulley 31 side relative to driven shaft (AC) and fan (VNT).

Cams (CM1), (CM2) do not slide on annular flange 41A because such annular flange 41A doesn't rotate about axis (Y). This fact has the advantage of increasing the working life of the surfaces of cams (CM1), (CM2), which would otherwise deteriorate quickly.

In other words, the use of the interposed axial bearing 41 is necessary to remove the friction between the rotating half-pulley 31B and the cams (CM1 and CM2). So, the contact point between cams (CM1 and CM2) and the annular flange 41A is fixed. There is friction only when the cams (CM1 and CM2) rotate (managed by the electrical motor (EM)) to axially move the half-pulley 31B.

Moreover, in the event of a power cut to electric motor (EM) and very high step-down ratios of reducer (RS), spring (SP2) is not strong enough to rotate cams (CM1), (CM2), which means belt (CNG) remains in position to ensure the desired velocity ratio of pulleys 21 and 31 until power is restored to electric motor (EM) and a new velocity ratio is imposed by rotation of cams (CM1), (CM2).

Electric motor (EM) may be turned on/off by the operator pressing an ON/OFF button (not shown), or may be controlled by an electronic central control unit (not shown) as a function, for example, of the temperature of the cooling fluid from the radiator (not shown), or the temperature of the air from the intercooler (not shown), or the temperature of the transmission oil from the exchanger (not shown).

To ensure precise adjustment of the velocity ratio between drive shaft (AM) and driven shaft (AC), the profiles of cams (CM1) and (CM2) may advantageously be so designed that contact with annular flange 41A and programmed rotation of the cams produce a predetermined variation in distance (S) between half-pulleys 31A and 31B.

If the electrical motor (EM) is governed by an electronic control unit (ECU), both the rotation and the designed shape of the cams (CM1 and CM2) can give different positions to the half-pulley 31B.

Moreover, the variation in distance (S) from (S1) to (S2), and vice versa, depends on the law of motion of cams (CM1) and (CM2).

The main advantage of the device described above lies in eliminating bulky, high-cost mechanisms by which to move at least one movable pulley.

Moreover, the high step-down ratios of the motor reducer enable fast, easy control of the velocity ratio between the drive shaft and the driven shaft to which the cooling fan is fitted.

## Claims

1. A device (10) with an engine cooling fan, for adjusting and controlling the rotation speed of said engine cooling fan (VNT); the device comprising:
a first device (20) and a second device (30)
the first device having a pulley (21), for transmitting power from a drive shaft (AM), of a given axis (X), to the second device (30) having a pulley (31), and a driven shaft (AC), of a given axis (Y), to which the cooling fan (VNT) is fitted;
power being transmitted from said drive shaft (AM) to said driven shaft (AC) by means of a belt (CNG);
the pulley (21) of said first device (20) comprising a fixed first half-pulley (21A); and a movable second half-pulley (21B) movable in a two-way direction (F);
the pulley (31) of said second device (30) comprising a fixed first half-pulley (31A); and a movable second half-pulley (31B) also movable in said two-way direction (F); and
actuating means (40) for moving said movable second half-pulley (31B) of said second device (30) axially in said two-way direction (F) such that the velocity ratio between the drive shaft (AM) and the driven shaft (AC) fitted with the fan (VNT) is variable;
said actuating means (40) for axially moving said movable second half-pulley (31B) of said second device (30) further comprising:
- movable supporting means (41) to which said movable second half-pulley (31B) of said second device (30) is fitted; and
- cam means (CM1, CM2) rotated by a drive (MTR), said cam means (CM1, CM2) being capable of moving said movable second half-pulley (31B) of said second device (30) axially such that the velocity ratio between the drive shaft (AM) and the driven shaft (AC) fitted with the fan (VNT) is variable;
**characterized in that** said cam means (CM1, CM2) comprises two cams (CM1, CM2), each cam (CM1, CM2) being fitted to a respective shaft (SH1, SH2) connected mechanically to a motor reducer (MTR).

2. A device (10) as claimed in Claim 1, **characterized in that** the fixed first half-pulley (21A) of the first device (20) is movable by rotation of said drive shaft (AM), the movable second half-pulley (21B) of the first device (20) is movable by the drive shaft (AM), and additionally movable axially in said two-way direction (F).

3. A device as claimed in Claim 2, **characterized in that** the additional axial movement of the second half-pulley (21B) is accomplished by elastic action of first elastic means (SP1).

4. A device (10) as claimed in any of the preceding Claims, **characterized in that** second elastic means (SP2) are interposed between the fixed first half-pulley (31A) and the movable second half-pulley (31B) of the second device (30) to push the movable second half-pulley (31B) of the second device (30) onto said actuating means (40) in any work condition.

5. A device (10) as claimed in any of the preceding Claims, **characterized in that** the movable supporting means is an axial roller bearing (41) on which the movable second half-pulley (31B) of the second device (30) is mounted; said axial bearing (41) comprising an annular flange (41A) movable axially in said two-way direction (F).

6. A device (10) as claimed in Claim 5, **characterized in that** the non-rotating annular flange (41A) is fitted around the driven shaft (AC) but is movable axially in said two-way direction (F).

7. A device (10) as claimed in Claim 1, **characterized in that** the motor reducer (MTR) and the two cams (CM1, CM2) move the movable second half-pulley (31B) of the second device (30) directly, and move the movable second half-pulley (21B) of the first device (20).

8. A device (10) as claimed in Claim 7, **characterized in that** a reducer (RS) of said motor reducer (MTR) is able to produce high step-down ratios, such that rotation of the two cams (CM1, CM2) is prevented when electric power supply to the electric motor (EM) of the motor reducer (MTR) is cut off.

9. A device (10) as claimed in Claim 8, **characterized in that** the electric motor (EM) is turned on/off by a user-operated ON/OFF button, or is controllable by an electronic central control unit, in function of an engine and/or vehicle characteristics.

10. A device (10) as claimed in any of the preceding Claims, **characterized in that**, to ensure precise adjustment of the velocity ratio between the drive shaft (AM) and the driven shaft (AC), the profiles of the cams (CM1, CM2) are so designed that contact of the cams with the annular flange (41A) and programmed rotation of the cams (CM1, CM2) produce a predetermined variation in the distance (S) between the fixed first half-pulleys (31A) and the movable second half-pulley (31B) of the second device (30).

11. A device (10) as claimed in any of the preceding Claims, **characterized in that** the two pulleys (21, 31) have the same diameter; and the inner circumferences of the fixed first half-pulley (21A) and the movable second half-pulley (21B) of the first device (20) are separated by a first distance (L) which varies between a first value (L1) and a second value (L2) lower than the first value (L1).

12. A device (10) as claimed in Claim 11, **characterized in that** the inner circumferences of the fixed first half-pulley (31A) and the movable second half-pulley (31B) of the second device (30) are separated by a second distance (S) which varies between a first value (S1) and a second value (S2) higher than the first value (S1); the variation in the second distance (S) from the first value (S1) to the second value (S2), and vice versa, depending on the law of motion of the cams (CM1, CM2).

13. A device (10) as claimed in Claim 12, **characterized in that** the change of the first distance (L) equals the change of the second distance (S).

14. A device as claimed in any of the preceding claims, **characterized in that** a variation in the distance (S) between said fixed first half-pulley (31A) and said movable second half-pulley (31B) of said second device (30), and in the distance (L) between said fixed first half-pulley (21A) and said movable second half-pulley (21B) of said first device (20) produces a variation in the velocity ratio between the drive shaft (AM) and the driven shaft (AC) fitted with the fan (VNT).

## Patentansprüche

1. Vorrichtung (10) mit einem Motor-Kühlgebläse, zur Einstellung und Steuerung der Drehgeschwindigkeit des Motor-Kühlgebläses (VNT), wobei die Vorrichtung Folgendes umfasst:
eine erste Vorrichtung (20) und eine zweite Vorrichtung (30);
wobei die erste Vorrichtung eine Riemenscheibe (21) zur Übertragung von Leistung von einer Antriebswelle (AM) mit einer vorgegebenen Achse (X) auf die zweite Vorrichtung (30) mit einer Riemenscheibe (31) und einer angetriebenen Welle (AC) mit einer vorgegebenen Achse (Y) aufweist, auf die das Kühlgebläse (VNT) aufgesetzt ist;
wobei Leistung von der Antriebswelle (AM) der angetriebenen Welle (AC) mit Hilfe eines Riemens (CNG) übertragen wird;
wobei die Riemenscheibe (21) der ersten Vorrichtung (20) eine feste erste Halb-Riemenscheibe (21A) und eine bewegliche zweite Halb-Riemenscheibe (21 B) umfasst, die in zwei Richtungen (F) beweglich ist;
wobei die Riemenscheibe (31) der zweiten Vorrichtung (30) eine feste erste Halb-Riemenscheibe (31A) und eine bewegliche zweite Halb-Riemenscheibe (31 B) umfasst, die ebenfalls in der zwei Richtungen (F) beweglich ist; und
Betätigungseinrichtungen (40) zum Bewegen der beweglichen zweiten Halb-Riemenscheibe (31 B) der zweiten Vorrichtung (30) in Axialrichtung in den zwei Richtungen (F) derart, dass das Geschwindigkeitsverhältnis zwischen der Antriebswelle (AM) und der angetriebenen Welle (AC), auf die das Gebläse (VNT) aufgesetzt ist, veränderlich ist,
wobei die Betätigungseinrichtungen (40) zur axialen Bewegung der beweglichen Halb-Riemenscheibe (31B) der zweiten Vorrichtung (30) weiterhin Folgendes umfassen:
- eine bewegliche Halterungseinrichtung (41), an der die bewegliche zweite Halb-Riemenscheibe (31 B) der zweiten Vorrichtung (30) angebracht ist; und
- Nockeneinrichtungen (CM1, CM2), die mit einem Antrieb (MTR) in Drehung versetzt werden, wobei die Nockeneinrichtungen (CM1, CM2) zur Bewegung der beweglichen zweiten Halb-Riemenscheibe (31 B) der zweiten Vorrichtung (30) in Axialrichtung derart ausgebildet sind, dass das Geschwindigkeitsverhältnis zwischen der Antriebswelle (AM) und der angetriebenen Welle (AC), die mit dem Gebläse (VNT) verbunden ist, veränderlich ist;
**dadurch gekennzeichnet, dass** die Nockeneinrichtungen (CM1, CM2) zwei Nocken (CM1, CM2) umfassen, wobei jeder Nocken (CM1, CM2) auf eine jeweilige Welle (SH1, SH2) aufgesetzt ist, die mechanisch mit einem Motor-Untersetzungsgetriebe (MTR) verbunden ist.

2. Vorrichtung (10) nach Anspruch 1, **dadurch gekennzeichnet, dass** die feste erste Halb-Riemenscheibe der ersten Vorrichtung (20) durch eine Drehung der Antriebswelle (AM) beweglich ist, wobei die bewegliche zweite Halb-Riemenscheibe (21 B) der zweiten Vorrichtung (20) durch die Antriebswelle (AM) und zusätzlich in Axialrichtung in den zwei Richtungen (F) beweglich ist.

3. Vorrichtung nach Anspruch 2, **dadurch gekennzeichnet, dass** die zusätzliche axiale Bewegung der zweiten Halb-Riemenscheibe (21B) durch eine elastische Wirkung von ersten elastischen Einrichtungen (SP1) erreicht wird.

4. Vorrichtung (10) nach einem der vorhergehenden Ansprüche, **dadurch gekennzeichnet, dass** zweite elastische Einrichtungen (SP2) zwischen der ersten festen Halb-Riemenscheibe (31A) und der beweglichen zweiten Halb-Riemenscheibe (31B) der zweiten Vorrichtung (30) vorgesehen sind, um die bewegliche zweite Halb-Riemenscheibe (31B) der zweiten Vorrichtung (30) in jedem Arbeitszustand auf die Betätigungseinrichtung (40) zu drücken.

5. Vorrichtung (10) nach einem der vorhergehenden Ansprüche, **dadurch gekennzeichnet, dass** die bewegliche Halterungseinrichtung ein axiales Rollenlager (41) ist, auf dem die bewegliche zweite Halb-Riemenscheibe (31B) der zweiten Vorrichtung (30) befestigt ist; wobei das Axiallager (41) einen ringförmigen Flansch (41A) umfasst, der in Axialrichtung in den zwei Richtungen (F) beweglich ist.

6. Vorrichtung nach Anspruch 5, **dadurch gekennzeichnet, dass** der nicht rotierende ringförmige Flansch (41A) um die angetriebene Welle (AC) herum aufgesetzt, jedoch in Axialrichtung in den zwei Richtungen (F) beweglich ist.

7. Vorrichtung (10) nach Anspruch 1, **dadurch gekennzeichnet, dass** das Motor-Untersetzungsgetriebe (MTR) und die zwei Nocken (CM1, CM2) die bewegliche zweite Halb-Riemenscheibe (31B) der zweiten Vorrichtung (30) direkt bewegen und die bewegliche zweite Halb-Riemenscheibe (21B) der zweiten Vorrichtung (20) bewegen.

8. Vorrichtung (10) nach Anspruch 7, **dadurch gekennzeichnet, dass** ein Untersetzungsgetriebe (RS) des Motor-Untersetzungsgetriebes (MTR) in der Lage ist, hohe Untersetzungsverhältnisse zu erzeugen, derart, dass die Drehung der zwei Nocken (CM1, CM2) verhindert wird, wenn die elektrische Leistungsversorgung des Elektromotors (EM) des Motor-Untersetzungsgetriebes (MTR) abgeschaltet ist.

9. Vorrichtung (10) nach Anspruch 8, **dadurch gekennzeichnet, dass** der Elektromotor (EM) durch einen von dem Benutzer betätigten EIN/AUS-Knopf ein/aus geschaltet wird oder durch eine elektronische zentrale Steuereinheit als Funktion einer Motor- und/oder Fahrzeug-Charakteristik steuerbar ist.

10. Vorrichtung (10) nach einem der vorhergehenden Ansprüche, **dadurch gekennzeichnet, dass** zur Sicherstellung einer präzisen Einstellung des Geschwindigkeitsverhältnisses zwischen der Antriebswelle (AM) und der angetriebenen Welle (AC) die Profile der Nocken (CM1, CM2) so ausgelegt sind, dass der Kontakt der Nocken mit dem ringförmigen Flansch (41A) und eine programmierte Drehung der Nocken (CM1, CM2) eine vorgegebene Änderung des Abstandes (S) zwischen dem festen ersten Halb-Riemenscheiben (31A) und der beweglichen zweiten Halb-Riemenscheibe (31 B) der zweiten Vorrichtung hervorruft.

11. Vorrichtung (10) nach einem der vorhergehenden Ansprüche, **dadurch gekennzeichnet, dass** die zwei Riemenscheiben (21, 31) den gleichen Durchmesser aufweisen; und dass der Innenumfang der festen ersten Halb-Riemenscheibe (21A) und der beweglichen zweiten Halb-Riemenscheibe (21B) der ersten Vorrichtung (20) durch einen ersten Abstand (L) getrennt sind, der sich zwischen einem ersten Wert (L1) und einem zweiten Wert (L2) ändert, der niedriger als der erste Wert (L1) ist.

12. Vorrichtung (10) nach Anspruch 11, **dadurch gekennzeichnet, dass** der Innenumfang der festen ersten Halb-Riemenscheibe (31A) und der Innenumfang der beweglichen zweiten Halb-Riemenscheibe (31B) der zweiten Vorrichtung durch einen zweiten Abstand (S) getrennt sind, der sich zwischen einem ersten Wert (S1) und einem zweiten Wert (S2) ändert, der größer als der erste Wert (S1) ist; wobei die Änderung des zweiten Abstandes (S) von dem ersten Wert (S1) auf den zweiten Wert (S2) und umgekehrt von dem Bewegungsgesetz der Nocken (CM1, CM2) abhängt.

13. Vorrichtung (10) nach Anspruch 12, **dadurch gekennzeichnet, dass** die Änderung des ersten Abstandes (L) gleich der Änderung des zweiten Abstandes (S) ist.

14. Vorrichtung nach einem der vorhergehenden Ansprüche, **dadurch gekennzeichnet, dass** eine Änderung des Abstandes (S) zwischen der festen ersten Halb-Riemenscheibe (31A) und der beweglichen zweiten Halb-Riemenscheibe (31 B) der zweiten Vorrichtung (30) und des Abstandes (L) zwischen der festen ersten Halb-Riemenscheibe (21A) und der beweglichen zweiten Halb-Riemenscheibe (21B) der ersten Vorrichtung (20) eine Änderung des Geschwindigkeitsverhältnisses zwischen der Antriebswelle (AM) und der angetriebenen Welle (AC) hervorruft, die mit dem Gebläse (VNT) versehen ist.

## Revendications

1. Dispositif (10) comportant un ventilateur de refroidissement de moteur, permettant de régler et commander la vitesse de rotation du dit ventilateur de refroidissement de moteur (VNT), ledit dispositif comprenant :
un premier mécanisme (20) et un second mécanisme (30)
le premier mécanisme comportant une poulie (21), pour transmettre la force d'un arbre menant (AM), d'un axe donné (X), vers le second mécanisme (30) comportant une poulie (31), et un arbre mené (AC), d'un axe donné (Y), sur lequel le ventilateur de refroidissement (VNT) est monté,
la force étant transmise du dit arbre menant (AM) au dit arbre mené (AC) au moyen d'une courroie (CNG),
la poulie (21) du dit premier mécanisme (20) comprenant une première demi-poulie fixe (21A), et une seconde demi-poulie mobile (21B) dans une direction (F) dans les deux sens,
la poulie (31) du dit second mécanisme (30) comprenant une première demi-poulie fixe (31A) et une seconde demi-poulie (31B) également mobile dans ladite direction (F) dans les deux sens, et
un moyen d'actionnement (40) pour faire déplacer ladite seconde poulie mobile (31B) du dit second mécanisme (30) axialement dans ladite direction (F) dans les deux sens, de sorte que le rapport de vitesse entre l'arbre menant (AM) et l'arbre mené (AC) équipé du ventilateur (VNT) est variable,
ledit moyen d'actionnement (40) pour déplacer axialement ladite seconde demi-poulie mobile (31B) du dit second mécanisme (30) comprenant en plus :
- un moyen de support mobile (41) sur lequel ladite seconde demi-poulie mobile (31B) du dit second mécanisme (30) est montée, et
- des moyens de came (CM1, CM2) mis en rotation par un entraînement (MTR), lesdits moyens de came (CM1, CM2) étant capables de déplacer ladite seconde demi-poulie mobile (31B) du dit second mécanisme (30) axialement de telle sorte que le rapport de vitesse entre l'arbre menant (AM) et l'arbre mené (AC) équipé du ventilateur (VNT) est variable,
**caractérisé en ce que** lesdits moyens de came (CM1, CM2) comprennent deux cames (CM1, CM2), chaque came (CM1, CM2) étant montée sur un arbre respectif (SH1, SH2) connecté mécaniquement à un motoréducteur (MTR).

2. Dispositif (10) selon la revendication 1, **caractérisé en ce que** la première demi-poulie fixe (21A) du premier mécanisme (20) est mobile par rotation du dit arbre menant (AM), la seconde demi-poulie mobile (21B) du premier mécanisme (20) est mobile par rotation de l'arbre menant (AM), et mobile en plus axialement dans ladite direction (F) dans les deux sens.

3. Dispositif melon la revendication 2, **caractérisé en ce que** le mouvement axial complémentaire de la seconde demi-poulie (21B) est accompli par une action élastique d'un premier élément élastique (SP1).

4. Dispositif (10) selon l'une quelconque des revendications précédentes, **caractérisé en ce que** un second élément élastique (SP2) est interposé entre la première demi-poulie fixe (31A) et la seconde demi-poulie mobile (31B) du second mécanisme (30) pour appuyer la seconde demi-poulie mobile (31B) du second mécanisme (30) sur ledit moyen d'actionnement (40) dans n'importe quelle condition de travail.

5. Dispositif (10) selon l'une quelconque des revendications précédentes, **caractérisé en ce que** le moyen de support mobile est un roulement à rouleaux axial (41) sur lequel la seconde demi-poulie mobile (31B) du second mécanisme (30) est montée, ledit roulement axial (41) comprenant une bride annulaire (41A) déplaçable axialement dans ladite direction (F) dans les deux sens.

6. Dispositif (10) selon la revendication 5, **caractérisé en ce que** la bride annulaire non tournante (41A) est montée autour de l'arbre mené (AC), mais est mobile axialement dans ladite direction (F) dans les deux sens.

7. Dispositif (10) selon la revendication 1, **caractérisé en ce que** le motoréducteur (MTR) et les deux cames (CM1, CM2 déplacent la seconde demi-poulie mobile (31B) du second mécanisme (30) directement, et déplacent la seconde demi-poulie mobile (21B) du premier mécanisme (20).

8. Dispositif (10) selon la revendication 7, **caractérisé en ce qu'**un réducteur (RS) du dit motoréducteur (MTR) est capable de produire des rapports de démultiplication élevés, de telle sorte que la rotation des cames (CM1, CM2) est empêchée lorsque l'alimentation électrique vers le moteur électrique (EM) du motoréducteur (MTR) est coupée.

9. Dispositif (10) selon la revendication 8, **caractérisé en ce que** le moteur électrique (EM) est mis en marche / à l'arrêt par un bouton marche/arrêt actionné par l'utilisateur ou peut être commandé par une unité de commande centrale, en fonction de caractéristiques de moteur et/ou de véhicule.

10. Dispositif (10) selon l'une quelconque des revendications précédentes, **caractérisé en ce que**, pour assurer un réglage précis du rapport de vitesse entre l'arbre menant (AM) et l'arbre mené (AC), les profils des cames (CM1, CM2) sont conçus de telle sorte que le contact des cames avec la bride annulaire (41A) et la rotation programmée des cames (CM1, CM2) produisent une variation prédéterminée de la distance (S) entre la première demi-poulie fixe (31A) et la seconde demi-poulie mobile (31B) du second mécanisme (30).

11. Dispositif (10) selon l'une quelconque des revendications précédentes, **caractérisé en ce que** les deux poulies (21, 31) ont le même diamètre, et les circonférences intérieures de la première demi-poulie fixe (21A) et de la seconde demi-poulie mobile (21B) du premier mécanisme (20) sont séparées par une première distance (L) qui varient entre une première valeur (L1) et une seconde valeur (L2) inférieure à la première valeur (L1).

12. Dispositif (10) selon la revendication 11, **caractérisé en ce que** les circonférences intéres de la première demi-poulie fixe (31A) et de la seconde demi-poulie mobile (31B) du second mécanisme (30) sont séparées par une seconde distance (S) qui varie entre une première valeur (S1) et une seconde valeur (S2) supérieure à la première valeur (S1), la variation de la seconde distance (S) de la première valeur (S1) à la seconde valeur (S2), et vice-versa, étant fonction de la loi du mouvement des cames (CM1, CM2).

13. Dispositif (10) selon la revendication 12, **caractérisé en ce que** la variation de la première distance (L) est égale à la variation de la seconde distance (S).

14. Dispositif melon l'une quelconque des revendications précédentes, **caractérisé en ce qu'**une variation de la distance (S) entre ladite première demi-poulie fixe (31A) et ladite seconde demi-poulie mobile (31B) du dit second mécanisme (30), et de la distance (L) entre ladite première demi-poulie fixe (21A) et ladite seconde demi-poulie mobile (21B) du dit premier mécanisme (20) produit une variation du rapport de vitesse entre l'arbre menant (AM) et l'arbre mené (AC) équipé du ventilateur (VNT).
